# EUROPEAN PATENT SPECIFICATION

(11) **EP 3 503 717 B1**
(45) Date of publication and mention of the grant of the patent: **15.07.2020**
(21) Application number: 17757577.6
(22) Date of filing: 17.08.2017
(51) Int. Cl.: A01K 5/02

(54) **AUTOMATED FEED RATION PREPARING SYSTEM**
AUTOMATISIERTES SYSTEM ZUR HERSTELLUNG EINER FUTTERRATION
SYSTÈME AUTOMATISÉ DE PRÉPARATION DE RATION ALIMENTAIRE

(30) Priority: 23.08.2016 NL 2017350
(43) Date of publication of application: 03.07.2019
(73) Proprietor: Lely Patent N.V., 3147 PB Maassluis (NL)
(72) Inventor: VAN DEN BERG, Karel, 3147 PB Maassluis (NL); WIGMAN, Tomas, 3147 PB Maassluis (NL); BLOKLAND, Korstiaan Cornelis, 3147 PB Maassluis (NL)
(74) Representative: Octrooibureau Van der Lely N.V.
(86) International application number: PCT/NL2017/050541
(87) International publication number: WO 2018/038603

(56) References cited:
- WO-A1-2015/178763
- DE-A1- 3 437 709
- US-A- 4 409 096

## Description

The present invention relates to an automated feed ration preparing system animals for example use in an animal feeding system. The invention further relates to a method for automatically preparing feed rations for animals.

Automated feed ration preparing systems are known in the art and typically include a feed storage storing multiple feed types, a feed loading system and a feed container in which quantities of selected feed types are loaded and mixed and a control system controlling the loading and mixing according to a predetermined recipe prescribing the selected feed types and corresponding quantities.

Typically, the feed preparing system operates in a feeding system, which feeding system is also arranged to feed the animals by e.g. dispensing the feed at a feed fence where it will be accessible to the animals. In automated feed systems the dispensing takes place automatically. Dispensing generally is done by a feed wagon, which can also be the feed mixer. Systems with a stationary mixer and a separate feed wagon are also known in the art. An example of such an automated feeding system is described in WO2015178763 and in WO2013157928, in which a feed system is described which comprises a feed wagon, a feed storage system for holding at least one variety of feed, a feed loading site for the feed wagon, a feed loading device and a control system with a memory in which data are stored and these data comprise a plurality of feed rations. A system for the treatment of particulate material comprising screening means to produce undersize and oversize fractions is known from US4,409,096A1.

With an automated feed ration preparing system, the quality of the feed ration can be monitored better as well, after all the ration is automatically prepared. Such feed ration preparing system makes it possible to automatically adapt the ration composition of the feed to be distributed, since multiple types of feed, such as ensilage and minerals, can be loaded and for example mixed in a feed container by the system in varying amounts. By changing the composition of the ration, the ration can be adapted to suit the needs of the animals taking account for the physical state of the animal, for example for dairy animals taking into account the stage of the lactation cycle of the animal or illness.

Systems for automatically preparing feed rations for animals may also be provided without being integrated in an automated animal feeding system. Such system may for example be used to automatically prepare feed rations for animals, while the prepared feed rations are manually distributed to the animals.

The system for automatically preparing feed rations may use different feed types, such as ensilage, potatoes, brewers grains, bales of hay, minerals, feed supplements, that can be used to prepare the feed rations. The number of feed types that are available for preparing the feed rations, and their composition, determine the flexibility of the system to prepare different feed rations.

This normally means that in order to increase the flexibility of the feed preparing device to prepare different types of feed rations, i.e. feed rations with different compositions, a larger number of possible feed types are required. This results in a more complex feeding system which may be more expensive and labor intensive to use.

It is an object of the invention to provide an automated feeding system for automatically preparing feed rations which solves the above-mentioned problem or at least to provide an alternative system.

The present invention provides an automated feed ration preparing system for use in an animal feeding system as defined in claim 1.

By providing a sieving device feed of a chosen ensiled feed type present in the feed storage may be separated into at least two feed fractions, which fractions can be used in preparing different feed rations. By suitably programming the control system to retrieve a quantity of one or more of the at least two feed fraction and load it into the feed container the ration composition can be optimally adapted to the need of the animals.

Note that by providing a sieving device, even if it is a simple device from which only two fractions result from sieving, the possibilities to adapt prepare different rations is already greatly enhanced. In the most simple embodiment a ration may use e.g. only one of the two fractions of the sieved feed type. But it is also be possible to use both fractions in a different proportion than the proportion resulting from sieving. When more than two fractions result from passing feed through the sieving device, it is possible to use any number of fractions including all fractions. By varying the proportions in which the fractions are, i.e. use different proportions than those of the resulting fractions, the feed ration can be adapted. In the proposed system it is also technically possible to use all sieved fractions in the same ratio as resulting from the sieving, but this would not provide an advantage or an adaptation of the ration.

By providing a sieving device the ration preparing system becomes more versatile while at the same time still storing for example a single type of ensilage at a single storage location. Thus, the provision of the sieving device in the system for automatically preparing feed rations for animals increases the flexibility in the feed rations to be prepared in the system without overly increasing cost and complexity.

According to the present invention the two or more feed fractions comprise a first feed fraction having a first feed energy content and a second feed component having a second feed energy content, wherein the first feed energy content is higher than the second feed energy content.

This is achieved by sieving with a suitable mesh size, i.e. a mesh size which will allow fractions to result and not by having a mesh size which will let all parts pass and not result in fractions. Of course by carefully selecting the mesh size when separating corn ensilage a better result can be obtained, namely when the smaller particles pass through the mess these generally will be material with higher starch content. For example in a simple sieve with one sieving pass, when corn silage is separated the first fraction which passes through mesh contains most of the corn kernel material and the second fraction which did not pass contains most of the chopped stem parts of the corn. This is because corn ensilage is a whole crop ensilage and is produced by harvesting, chopping/conditioning corn plants. The chopping/conditioning means that the plants are chopped into short parts and corn kernels are cracked, the resulting material is ensiled either in bunkers or in wrapped bales. Upon use of the corn ensilage blocks are cut from the silage bunker and are put into feed storage locations, typically one block per location. When passing this material through a sieve, the material stemming from the cracked kernels will pass through the mesh. This is very small sometimes floury material, including small bits and pieces of cracked kernels, which is the type of material in the first fraction.

Of course material in the first fraction depends on the chosen the mesh size of sieve being used as well as on the corn ensilage characteristics which in turn depend on the chopping/conditioning and ensiling process. In general when using a mesh size of 4.75mm and the corn was properly treated before being ensiled, 70% of the starch contained in the ensilage will pass through the 4.75mm mesh openings. The 4.75 mesh size is also a known size for testing ensiled material, this test can also be used to determine the best mesh size of the sieve in the system. In any event, when an intelligent choice in mesh size is made, the sieving device will at least produce a first fraction which passed through the sieve mesh openings and a second fraction which did not and the second fraction will typically include less of the corn kernel material than the first fraction and more of the other plant portions. Thus the second fraction typically will include less starch then the first fraction.

Note that the term "mesh" is used to describe the perforations and associated size through which a portion of the material to be separated passes. It will encompass a mesh in the literal sense of the word, i.e. a barrier made of connected strands of metal, fiber, or other flexible/ductile materials. The mesh may be similar to a web or a net in that it has many attached or woven strands. However, also included are e.g. perforated metal sheets.

In accordance with the example given above, in a further embodiment the at least one type of ensiled feed is ensiled corn and wherein the first feed fraction comprises a first weight percentage corn starch and the second feed fraction comprises a second weight percentage corn starch, and wherein the first weight percentage is larger than the second weight percentage.

Although other ensiled crops such as millet or sorghum, or even grain crops in general, may be used, ensiled corn or maize is particularly suitable for this invention. This because it has a relatively large kernel portion which renders it better suitable for sieving out in fractions.

In an embodiment the sieving device comprises a rotatable perforated cylindrical drum screen.

The rotatable perforated cylindrical drum screen is also known as trommel screen, and it comprises a rotatable perforated cylindrical body or drum that is normally elevated at an angle. The cylindrical body is rotatable about it cylinder axis. The elevated end is the feed end where the material to be separated enters the drum. By the rotating action and the elevation, the material fed into the feed end spirals down to the lower end or exit.

The smaller material (i.e. smaller than the mesh size of the screen) will pass through the screen and fall down and the rest will exit at the lower end of the drum. It is also possible to equip the drum with cylindrical screen sections with different mesh sizes starting with the smallest mesh size at the feed inlet and progressively having larger mesh sizes towards the outlet. With such a drum screen the material may be separated in multiple fractions with differently sized material.

By providing a rotatable perforated cylindrical drum screen it is easier to have load the ensiled material and to retrieve the fractions that result from sieving which renders the system more efficient.

In an embodiment the feed loading system comprises at least one moving belt extending from the sieving device to the feed container when the feed container is in a feed loading position.

By providing at least one moving belt at the sieving device a fraction resulting from sieving may be easily and automatically transported to the feed container.

In an embodiment the feed container comprises weighing means arranged to determine the weight of material in the container and the control system is arranged to store weight data from the weighing means at least upon each instant that material has been loaded into the container, and to use the stored weighing data in a control loop to control the feed loading system to load the predetermined quantities into the container in accordance with the ration recipe.

By providing weighing means at the feed container, e.g. by mounting the container on a number of load cells, the amount of material in the container may be determined. By arranging the control system to store and use the weight data in a control loop the quantities of feed type material loaded into the container may be controlled.

In an embodiment the sieving device is located in the feed storage at a feed storage location, and the two or more feed fractions stemming from the sieving device are deposited in respective sub-locations of the feed storage location of the sieving device.

By providing the sieving device in the feed storage the sieved components of the ensilage are disposed in the storage by the sieving device. As such, the ensilage can be separated in stock, rather than on request. Thereby, the sieving can for example take place at any convenient time such as for example at night. The system is then able to produce fractions as stored feed types.

In an embodiment the control system is arranged to couple and store feed type data and/or fraction data to respective feed storage locations and/or feed storage sub-locations, and to control the feed loading system to retrieve the feed types and/or fractions in accordance with the ration recipe from the relevant feed storage locations and/or feed storage sub-locations for loading into the feed container.

By coupling and storing feed type and/or fraction data to respective feed storage locations and/or feed storage sub-locations the feed ration preparing system can control the feed loading system to retrieve feed types or fractions from feed storage locations or sub-locations. In this manner the system is versatile, after all a single feed type may be stored in several locations, which is convenient when feed is stored in bales. Each time a feed type is placed in the feed storage at a feed location the feed type and the feed storage location are linked. The control system will know where all the locations are in the real world. In a feed ration preparing system provided with a feed loading system which comprises a feed grabbing bucket with an overhead traveling trolley system, the bucket may be navigated between the feed container and a feed storage location or feed storage sub-location to retrieve a feed type or fraction and load it into the feed container when at a feed loading location. In a feed ration preparing system in which the feed types are stored in one or more feed bunkers, the feed bunkers typically being provided with a feed conveying system for conveying the feed to an unloading end of the bunker and into the feed container. In such systems the feed container is controlled to move to an unloading end of the bunker in order to be loaded. In accordance with the invention the unloading end of each bunker is a feed storage location and the feed type and the storage location are coupled and stored in the control system. Similarly a so-called tower silo, as well as the discharging ends of mineral dosing systems, may be stored as feed storage location in the system.

In an embodiment the system comprises a feed mixing device to mix the contents of the feed container.

By providing a feed mixing device the ration may be mixed so that the feed types are property mixed and animals eating from the ration will ingest all feed types used.

In an embodiment the feed mixing device is part of the feed container. By providing the mixing device as part of the feed container, the system becomes simple to construct and to use.

In an embodiment the system further is configured to automatically feed animals, and comprises a feed dispensing vehicle configured to move to a plurality of feeding locations and to dispense feed at least one of the feeding locations.

In this manner a fully operational automated animal feeding system may be provided which automatically prepares feed rations and dispenses the prepared feed to the animals.

In an embodiment the feed dispensing vehicle comprises the feed container.

In this manner it is not necessary to have a separate feed container in which the feed ration is prepared, but the ration is prepared in the feed dispensing vehicle.

In an embodiment, the feed dispensing vehicle is an autonomous vehicle configured to autonomously move between a loading location and the feeding locations.

The invention also provides a method of automatically preparing feed rations as described in claim 12.

In an embodiment the method further includes the step of mixing by a feed mixing device of at least one of the two or more feed components in the feed container.

The invention will be explained in more detail below by means of some non-limiting examples and drawings, in which:

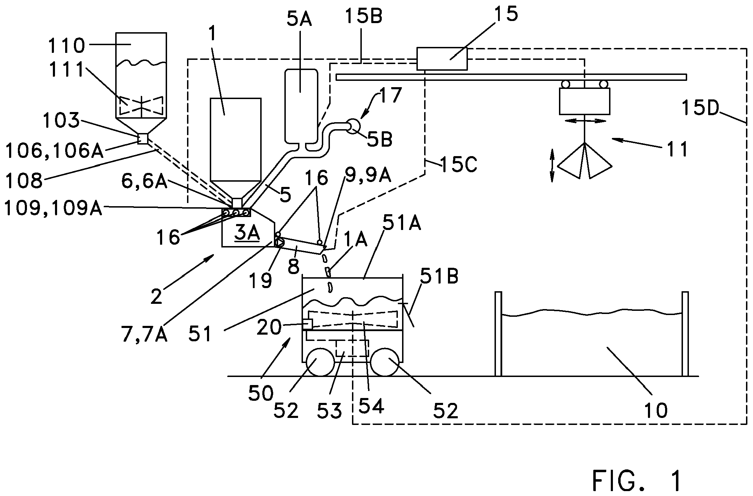

- Figure 1 is a schematic partly cut-away side view of an embodiment of the feed ration preparing system,

In figure 1 automated feed ration preparing system 1 is shown, having feed storage 2 with multiple feed storage locations 3 for holding multiple feed types 4a,4b,4c including at least one type of ensiled feed, such as e.g. feed type 4b. At the side of the feed storage 2 the feed container 5 for receiving quantities of feed. Automated feed loading system 6 is shown in the form of a bridge crane with a traveling crane bucket, the feed loading system is configured for loading quantities of feed into feed container 5. The system is controlled by suitably arranged control system 7, which in figure 1 is shown very schematically near feed storage 2 but could be placed elsewhere. The control system 7 can communicate with the feed loading device and the feed container, by wire or wirelessly by for example via Bluetooth or Wi-Fi.

The control system is provided with a memory in which data are stored. The data include a feed type library and a ration library. The ration library comprising recipes for making rations, each recipe prescribing quantities of the different feed types to be loaded into the feed container 5. In order to determine the quantities loaded into container 5, it is equipped with a weighing means 22, e.g. load cells. Additionally loading system may also be provided with quantity determining means, such as e.g. load cells, 3D camera or means which determine the quantity based on the energy it takes to lift the crane bucket with feed in it. The control system is programmed to control the loading system to load the feed container according to a recipe, i.e. with the predetermined feed types and quantities thereof. A stored ration recipe prescribes quantities of at least two feed types.

The automated feed system 1 further includes sieving device 8 arranged to separate quantities of an ensiled feed into two or more feed fractions. The sieving device 8 is depicted in Figure 1 as a rotatable perforated cylindrical drum screen. The drum screen has a cylindrical body 9 which may be driven into rotation about its center axis, with suitable drive means (not shown). The drum body wall is perforated with perforations 10, or alternatively is formed by a metal mesh. The drum body 9 includes an inlet 11 and an outlet 12. Feed loaded in the sieving device by the feed loading system into the inlet, will be separated into two fractions. Figure 1 shows a first fraction 13 with passed through the perforations (or mesh) and has a first energy content, and a second fraction 14 which exited the drum through the outlet 12 and has a second energy content. In figure 1, where the ensiled feed in sieving device 8 is feed type 4b, the first fraction 13 is also indicated as 4b1 and the second fraction as 4b2. When the feed type 4b is maize/corn, the first fraction 4b1, i.e. the material which passes through mesh contains most of the corn kernel material and the second fraction 4b2 which did not pass contains most of the chopped stem parts of the corn. By having most of the corn kernel material first fraction 13, 4b1 has a higher corn starch weight percentage and a higher energy content than the second fraction 14, 4b2 which has a lower weight percentage and a lower energy content.

The control system 7 couples and stores feed type data 4a, 4b, 4c and/or fraction data 13, 4b1, 14, 4b2 to respective feed storage locations 3, and/or feed storage sub-locations 15a, 15b, and controls the feed loading 6 system to retrieve the feed types and/or fractions in accordance with the ration recipe from the relevant feed storage locations and/or feed storage sub-locations for loading into the feed container. Likewise control system 7 includes a stored coupling of location 15 with sieving device 8, and location 16 as feed loading location for the feed container 5.

The feed loading device 6 of the depicted embodiment is a bridge crane with a traveling crane bucket. The bridge crane 6 including a frame with vertical supports 17, with runway beams 18 and a movable bridge 19 which can drive back and forth along the runway beams 18 with wheel sets 18a, 18a on the ends of bridge 19 . A trolley 20 is mounted on and movable along the bridge 19, from the trolley hangs crane bucket 21. The crane bucket 21 can be opened and closed, and lifted and lowered in order to pick up feed from a feed storage location or sub-location. The picked-up feed can be loaded into the sieving device 8 or into the feed container 5 when it is at the feed loading location 16. Such bridge cranes are known in the art thus are not further explained. The bridge crane will receive the data it needs to load the feed wagon from the control system 7 directly, but systems in which divided control is possible and where the bridge crane receives the relevant data via the feed container or even via the sieving device are also possible. In any event all data about feed types, feed storage locations and recipes are also stored at the central control 7.

Of course other types of loading devices are also possible. For example the sieving device may be equipped with conveyors such as moving belts, one belt per fraction. The belts each having a portion located at the sieving device such that it catches feed as it emerges from the sieving device (i.e. either by passing through perforations 10 or by exiting from the outlet 12.) and a dispensing end. The dispensing end of each belt is at feed loading location 16 high enough to dispense the feed into the feed container when it is parked at the feed loading location.

The above is for feeding systems using a feed storage as shown in figure 1. However, the invention can also be used in feed preparing systems having one or more stationary feed storage containers with integral transporting means with which feed in the container is transported to a dispensing point. In such systems, the feed container is movable and arranged to navigate from storage place to storage place, i.e. their dispensing points, to be loaded with the feed quantities. Such feed containers may be hanging from a rail and movable along the rail, or maybe part of a vehicle.

Alternatively the system may include a self-loading feed wagon in which the feed loading device is integrated, and it will navigate to the different feed storage locations and load itself.

Feed container 5, as shown in the embodiment of figure 1, is part of feed dispensing vehicle 23, and is mounted on frame 24 which is provided with suitable transporting means such as motor driven wheels 25. Container 5 is also provided with opening 26, closable with a door, through which opening feed can be dispensed out of the container. Feed container 5 is further provided with a mixing device 27, which in figure 1 is shown to be a vertical mixing auger. Instead of being part of the feed dispensing vehicle, the feed container can be a separate device. As separate device it can also contain a mixing device, such as an auger.

Feed dispensing vehicle 23 can move to an animal housing 28 having animal living areas 29, 30 which animals 31 reside. Each living area includes a feed fence 32, 33 which separates the living area from feeding alley 34. Feed dispensing vehicle 23 can travel along the feed fences to dispense feed. Each fence 32, 33 may be known in the system as a feeding location 32, 33. The system can store which feeding location 32, 33 belongs to which living area 29, 30 and also which animals reside there. Then the system can also link the ration the animals should get to the feeding location. For example in a dairy farm, living area 29 may be for young animals which do not yet produce milk and living area 30 may be for high productive animals. The animals of area 29 require a different ration form those in area 30. By linking the different rations to the different fences 32, 32. In this manner feed dispensing vehicle 23 can be controlled to dispense the proper ration to at the proper feeding location.

The invention is not limited to the illustrative embodiment represented in the figure. The person skilled in the art can make various modifications which lie within the scope of the claimed invention as defined in the claims.

## Claims

1. An automated feed ration preparing system (1) for use in an animal feeding system, comprising
- a feed storage (2) having multiple feed storage locations (3) for holding multiple feed types (4a,4b,4c) including at least one type of ensiled feed,
- an automated feed loading system (6) configured for loading quantities of feed in a feed container (5),
- a feed container (5) for receiving feed quantities from the feed loading system, and
- a control system (7) having at least one stored ration recipe prescribing quantities of at least two feed types and being arranged to control the feed loading system in accordance with the ration recipe to load predetermined quantities of at least two feed types into the feed container, **characterized in that** the feeding ration preparing system further includes a sieving device (8) arranged to separate the at least one type of ensiled feed into two or more feed fractions, wherein the two or more feed fractions comprise a first feed fraction (13) having a first feed energy content and a second feed fraction (14) having a second feed energy content, wherein the first feed energy content is higher than the second feed energy content, and wherein the control system is arranged to control the feed loading system in accordance with the ration recipe to load a quantity of at least one of the feed fractions into the feed container.

2. The system of claim 1, wherein the at least one type of ensiled feed is ensiled corn and wherein the first feed fraction comprises a first weight percentage corn starch and the second feed fraction comprises a second weight percentage corn starch, and wherein the first weight percentage is larger than the second weight percentage.

3. The system of any of the preceding claims, wherein the sieving device comprises a rotatable perforated cylindrical drum screen (9).

4. The system of any of the preceding claims, wherein the feed container comprises weighing means (22) arranged to determine the weight of material in the container and wherein the control system is arranged to store weight data from the weighing means at least upon each instant that material has been loaded into the container, and to use the stored weighing data in a control loop to control the feed loading system to load the predetermined quantities into the container in accordance with the ration recipe.

5. The system of any of the preceding claims wherein the sieving device is located in the feed storage at a feed storage location (3), and the two or more feed fractions stemming from the sieving device are deposited in respective sub-locations (15a,15b) of the feed storage location of the sieving device.

6. The system of any of the preceding claims wherein the control system is arranged to couple and store feed type and/or fraction data to respective feed storage locations and feed storage sub-locations, and to control the feed loading system to retrieve the feed types and/or fractions in accordance with the ration recipe from the relevant feed storage locations and/or feed storage sub-locations for loading into the feed container.

7. The system of any of the preceding claims, wherein the system comprises a feed mixing device (27) to mix the contents of the feed container.

8. The system of claim 7, wherein the feed mixing device is part of the feed container.

9. The system of any of the preceding claims, wherein the system is further configured to automatically feed animals, and comprises a feed dispensing vehicle (23) configured to move to a plurality of feeding locations and to dispense feed at least one of the feeding locations.

10. The system of claim 9, wherein the feed dispensing vehicle comprises the feed container.

11. The system of any of the claims 9-10, wherein the feed dispensing vehicle is an autonomous vehicle configured to autonomously move between a loading location and the feeding locations.

12. A method of automatically preparing feed rations, the method comprising the steps of
- storing in a feed storage (2) having multiple feed storage locations (4a,4b,4c) for holding multiple feed types at least one type of ensiled feed,
- loading, by an automated feed loading system (6), quantities of feed in a feed container,
- receiving, by a feed container (5), feed quantities from the feed loading system, and
- controlling, by a control system (7) having at least one stored ration recipe prescribing quantities of at least two feed types, the feed loading system to load in accordance with the ration recipe predetermined quantities of at least two feed types into the feed container, wherein the method further includes the steps of
- separating, by a sieving device (8), the at least one type of ensiled feed into two or more feed fractions, and controlling the feed loading system, by the control system, to load a quantity of at least one of the feed fractions in accordance with the ration recipe into the feed container, wherein the two or more feed fractions comprise a first feed fraction having a first feed energy content and a second feed fraction having a second feed energy content, wherein the first feed energy content is higher than the second feed energy content.

13. The method of claims 12, further including the step of mixing by a feed mixing device of at least one of the two or more feed components in the feed container.

## Patentansprüche

1. Automatisiertes Futterrationsbereitungssystem (1) zur Verwendung in einem Tierfütterungssystem, umfassend
- einen Futterspeicher (2) mit mehreren Futterspeicherorten (3) zum Fassen mehrerer Futterarten (4a, 4b, 4c) einschließlich mindestens einer Art von siliertem Futter,
- ein automatisiertes Futterbeschickungssystem (6), das zum Beschicken von Mengen von Futter in einen Futterbehälter (5) ausgestaltet ist,
- einen Futterbehälter (5) zum Aufnehmen von Futtermengen von dem Futterbeschickungssystem, und
- ein Steuersystem (7) mit mindestens einer gespeicherten Rationsrezeptur, die Mengen von mindestens zwei Futterarten vorschreibt, und das ausgelegt ist, das Futterbeschickungssystem gemäß der Rationsrezeptur zu steuern, um den Futterbehälter mit vorbestimmten Mengen von mindestens zwei Futterarten zu beschicken, **dadurch gekennzeichnet, dass**
das Futterrationsbereitungssystem ferner eine Siebvorrichtung (8) umfasst, die ausgelegt ist, die mindestens eine Art von siliertem Futter in zwei oder mehr Futteranteile zu trennen, wobei die zwei oder mehr Futteranteile einen ersten Futteranteil (13) mit einem ersten Futterenergiegehalt und einen zweiten Futteranteil (14) mit einem zweiten Futterenergiegehalt umfassen, wobei der erste Futterenergiegehalt höher als der zweite Futterenergiegehalt ist, und wobei das Steuersystem ausgelegt ist, das Futterbeschickungssystem gemäß der Rationsrezeptur zu steuern, um den Futterbehälter mit einer Menge von mindestens einem der Futteranteile zu beschicken.

2. System nach Anspruch 1, wobei die mindestens eine Art von siliertem Futter silierter Mais ist und wobei der erste Futteranteil einen ersten Gewichtsprozentanteil Maisstärke umfasst und der zweite Futteranteil einen zweiten Gewichtsprozentanteil Maisstärke umfasst, und wobei der erste Gewichtsprozentanteil größer als der zweite Gewichtsprozentanteil ist.

3. System nach einem der vorhergehenden Ansprüche, wobei die Siebvorrichtung ein drehbares zylindrisches Lochtrommelsieb (9) umfasst.

4. System nach einem der vorhergehenden Ansprüche, wobei der Futterbehälter Wiegemittel (22) umfasst, die zum Bestimmen des Gewichts des Materials in dem Behälter ausgelegt sind, und wobei das Steuersystem ausgelegt ist, Gewichtsdaten von den Wiegemitteln zumindest jedes Mal, wenn der Behälter mit Material beschickt wurde, zu speichern, und die gespeicherten Gewichtsdaten in einer Steuerschleife zu verwenden, um das Futterbeschickungssystem zu steuern, den Behälter gemäß der Rationsrezeptur mit den vorbestimmten Mengen zu beschicken.

5. System nach einem der vorhergehenden Ansprüche, wobei sich die Siebvorrichtung in dem Futterspeicher an einem Futterspeicherort (3) befindet, und die zwei oder mehr Futteranteile, die von der Siebvorrichtung stammen, in jeweiligen Unterorten (15a, 15b) des Futterspeicherorts der Siebvorrichtung gelagert werden.

6. System nach einem der vorhergehenden Ansprüche, wobei das Steuersystem ausgelegt ist, Futterart- und/oder -anteilsdaten mit jeweiligen Futterspeicherorten und Futterspeicherunterorten zu verknüpfen und zu speichern, und das Futterbeschickungssystem zu steuern, die Futterarten und/oder -anteile gemäß der Rationsrezeptur aus den betreffenden Futterspeicherorten und/oder Futterspeicherunterorten zum Beschicken des Futterbehälters zu entnehmen.

7. System nach einem der vorhergehenden Ansprüche, wobei das System eine Futtermischvorrichtung (27) zum Mischen der Inhalte des Futterbehälters umfasst.

8. System nach Anspruch 7, wobei die Futtermischvorrichtung Teil des Futterbehälters ist.

9. System nach einem der vorhergehenden Ansprüche, wobei das System ferner ausgelegt ist, Tiere automatisch zu füttern, und ein Futterabgabefahrzeug (23) umfasst, das ausgestaltet ist, sich zu einer Mehrzahl von Futterorten zu bewegen und Futter an mindestens einem der Futterorte abzugeben.

10. System nach Anspruch 9, wobei das Futterabgabefahrzeug den Futterbehälter umfasst.

11. System nach einem der Ansprüche 9-10, wobei das Futterabgabefahrzeug ein autonomes Fahrzeug ist, das ausgestaltet ist, sich autonom zwischen einem Beschickungsort und den Futterorten zu bewegen.

12. Verfahren zur automatischen Futterrationsbereitung, wobei das Verfahren die folgenden Schritte umfasst
- Speichern in einem Futterspeicher (2) mit mehreren Futterspeicherorten (4a, 4b, 4c) zum Fassen mehrerer Futterarten mindestens einer Art von siliertem Futter,
- Beschicken, durch ein automatisiertes Futterbeschickungssystem (6), eines Futterbehälters mit Mengen von Futter,
- Aufnehmen, durch einen Futterbehälter (5), von Futtermengen von dem Futterbeschickungssystem, und
- Steuern, durch ein Steuersystem (7) mit mindestens einer gespeicherten Rationsrezeptur, die Mengen von mindestens zwei Futterarten vorschreibt, des Futterbeschickungssystem, um den Futterbehälter mit vorbestimmten Mengen von mindestens zwei Futterarten gemäß der Rationsrezeptur zu beschicken, wobei das Verfahren ferner die folgenden Schritte umfasst
- Teilen, durch eine Siebvorrichtung (8), der mindestens einen Art von siliertem Futter in zwei oder mehr Futteranteile, und Steuern des Futterbeschickungssystems, durch das Steuersystem, um den Futterbehälter mit einer Menge von mindestens einem der Futteranteile gemäß der Rationsrezeptur zu beschicken, wobei die zwei oder mehr Futteranteile einen ersten Futteranteil mit einem ersten Futterenergiegehalt und einen zweiten Futteranteil mit einem zweiten Futterenergiegehalt umfassen, wobei der erste Futterenergiegehalt höher als der zweite Futterenergiegehalt ist.

13. Verfahren nach Anspruch 12, ferner umfassend den Schritt Mischen, durch eine Futtermischvorrichtung, mindestens eines der zwei oder mehr Futterbestandteile in den Futterbehälter.

## Revendications

1. Système automatisé de préparation de ration d'aliment (1) pour l'utilisation dans un système d'alimentation d'animaux, comprenant
- un stockage d'aliment (2) ayant de multiples emplacements de stockage d'aliment (3) pour contenir de multiples types d'aliment (4a, 4b, 4c) incluant au moins un type d'aliment ensilé,
- un système automatisé de chargement d'aliment (6) configuré pour charger des quantités d'aliment dans un contenant d'aliment (5),
- un contenant d'aliment (5) pour recevoir des quantités d'aliment à partir du système de chargement d'aliment, et
- un système de commande (7) ayant au moins une recette de ration stockée prescrivant des quantités d'au moins deux types d'aliment et étant agencé pour commander le système de chargement d'aliment conformément à la recette de ration pour charger des quantités prédéterminées d'au moins deux types d'aliment dans le contenant d'aliment,
**caractérisé en ce que**
le système de préparation de ration d'aliment inclut en outre un dispositif de tamisage (8) agencé pour séparer l'au moins un type d'aliment ensilé en deux ou plus fractions d'aliment, les deux ou plus fractions d'aliment comprenant une première fraction d'aliment (13) ayant une première teneur énergétique d'aliment et une seconde fraction d'aliment (14) ayant une seconde teneur énergétique d'aliment, la première teneur énergétique d'aliment étant plus élevée que la seconde teneur énergétique d'aliment, et le système de commande étant agencé pour commander le système de chargement d'aliment conformément à la recette de ration pour charger une quantité d'au moins une des fractions d'aliment dans le contenant d'aliment.

2. Système selon la revendication 1, dans lequel l'au moins un type d'aliment ensilé est du mais ensilé et dans lequel la première fraction d'aliment comprend un premier amidon de mais en pourcentage en poids et la seconde fraction d'aliment comprend un second amidon de maïs en pourcentage en poids, et dans lequel le premier pourcentage en poids est supérieur au second pourcentage en poids.

3. Système selon l'une quelconque des revendications précédentes, dans lequel le dispositif de tamisage comprend un crible en tambour cylindrique perforé rotatif (9).

4. Système selon l'une quelconque des revendications précédentes, dans lequel le contenant d'aliment comprend des moyens de pesage (22) agencés pour déterminer le poids de matériau dans le contenant et dans lequel le système de commande est agencé pour stocker des données de poids provenant des moyens de pesage au moins à chaque instant auquel un matériau a été chargé dans le contenant, et pour utiliser les données de pesage stockées dans une boucle de commande pour commander le système de chargement d'aliment pour charger les quantités prédéterminées dans le contenant conformément à la recette de ration.

5. Système selon l'une quelconque des revendications précédentes, dans lequel le dispositif de tamisage est situé dans le stockage d'aliment à un emplacement de stockage d'aliment (3), et les deux ou plus fractions d'aliment provenant du dispositif de tamisage sont déposées dans des sous-emplacements respectifs (15a, 15b) de l'emplacement de stockage d'aliment du dispositif de tamisage.

6. Système selon l'une quelconque des revendications précédentes, dans lequel le système de commande est agencé pour coupler et stocker des données de type et/ou de fraction d'aliment à/dans des emplacements de stockage d'aliment et sous-emplacements de stockage d'aliment respectifs, et pour commander le système de chargement d'aliment pour récupérer les types et/ou fractions d'aliment conformément à la recette de ration à partir des emplacements de stockage d'aliment et/ou sous-emplacements de stockage d'aliment pertinents pour le chargement dans le contenant d'aliment.

7. Système selon l'une quelconque des revendications précédentes, le système comprenant un dispositif de mélangeage d'aliment (27) pour mélanger le contenu du contenant d'aliment.

8. Système selon la revendication 7, dans lequel le dispositif de mélangeage d'aliment fait partie du contenant d'aliment.

9. Système selon l'une quelconque des revendications précédentes, le système étant en outre configuré pour automatiquement alimenter des animaux, et comprend un véhicule de distribution d'aliment (23) configuré pour se déplacer jusqu'à une pluralité d'emplacements d'alimentation et pour distribuer un aliment à au moins un des emplacements d'alimentation.

10. Système selon la revendication 9, dans lequel le véhicule de distribution d'aliment comprend le contenant d'aliment.

11. Système selon l'une quelconque des revendications 9 et 10, dans lequel le véhicule de distribution d'aliment est un véhicule autonome configuré pour se déplacer de façon autonome entre un emplacement de chargement et les emplacements d'alimentation.

12. Procédé de préparation automatique de rations d'aliment, le procédé comprenant les étapes de
- stockage, dans un stockage d'aliment (2) ayant de multiples emplacements de stockage d'aliment (4a, 4b, 4c) pour contenir de multiples types d'aliment, d'au moins un type d'aliment ensilé,
- chargement, par un système automatisé de chargement d'aliment (6), de quantités d'aliment dans un contenant d'aliment,
- réception, par un contenant d'aliment (5), de quantités d'aliment à partir du système de chargement d'aliment, et
- commande, par un système de commande (7) ayant au moins une recette de ration stockée prescrivant des quantités d'au moins deux types d'aliment, du système de chargement d'aliment pour charger, conformément à la recette de ration, des quantités prédéterminées d'au moins deux types d'aliment dans le contenant d'aliment, le procédé incluant en outre les étapes de
- séparation, par un dispositif de tamisage (8), de l'au moins un type d'aliment ensilé en deux ou plus fractions d'aliment, et la commande du système de chargement d'aliment, par le système de commande, pour charger une quantité d'au moins une des fractions d'aliment, conformément à la recette de ration, dans le contenant d'aliment, les deux ou plus fractions d'aliment comprenant une première fraction d'aliment ayant une première teneur énergétique d'aliment et une seconde fraction d'aliment ayant une seconde teneur énergétique d'aliment, la première teneur énergétique d'aliment étant plus élevée que la seconde teneur énergétique d'aliment.

13. Procédé selon la revendication 12, incluant en outre l'étape de mélangeage, par un dispositif de mélangeage d'aliment, de l'au moins un des deux ou plus composants d'aliment dans le contenant d'aliment.
